# EUROPEAN PATENT APPLICATION

(11) **EP 2 763 009 A1**
(43) Date of publication of application: **06.08.2014**
(21) Application number: 12834962.8
(22) Date of filing: 19.09.2012
(51) Int. Cl.: G06F 3/048, H04M 1/00, H04M 1/725

(54) **PORTABLE ELECTRONIC APPARATUS, INPUT OPERATION RECEPTION METHOD, AND INPUT OPERATION RECEPTION PROGRAM**

(30) Priority: 27.09.2011 JP 2011210975
(71) Applicant: NEC CASIO Mobile Communications, Ltd., Kawasaki-shi, Kanagawa 211-8666 (JP)
(72) Inventor: YAGIHASHI, Ayumu, Kawasaki-shi Kanagawa 211-8666 (JP); KATO, Yumi, Kawasaki-shi Kanagawa 211-8666 (JP); AOKI, Hiroyuki, Kawasaki-shi Kanagawa 211-8666 (JP); MURAYAMA, Atsuhiko, Kawasaki-shi Kanagawa 211-8666 (JP); SUGAHARA, Seiji, Tokyo 140-0002 (JP)
(74) Representative: Vossius & Partner
(86) International application number: PCT/JP2012/073937
(87) International publication number: WO 2013/047294

(57) **Abstract**

A portable terminal apparatus includes a first display screen and a second display screen serving as a rear surface of the first display screen. The portable terminal apparatus sets regions of the first and second display screens as regions in which operation inputs indicating a pair of processes are received. Thereby, the portable terminal apparatus can receive a plurality of input operations using the first and second display screens without increasing the size of the first display screen. Accordingly, the size increase of the portable terminal apparatus can be eliminated and the operability thereof can be improved.

## Description

### TECHNICAL FIELD

The present invention relates to a portable electronic apparatus, an input operation reception method, and an input operation reception program.

### BACKGROUND ART

In a portable electronic apparatus such as a mobile phone or a portable information terminal apparatus (a personal digital assistant (PDA)), size reduction of the apparatus is required and an area in which a display or an operation input means (for example, a push button) can be disposed is limited. Thus, a mechanism capable of improving operability while suppressing a size increase of a portable information apparatus is required.

Here, an information display apparatus disclosed in Patent Document 1 includes a panel-shaped touch input unit of a front surface and a panel-shaped touch input unit of a rear surface. Thus, a display of a screen is enlarged when an operation of tapping one point of the panel-shaped touch input unit of the rear surface with an index finger of a left hand is received in the information display apparatus, and the display of the screen is reduced when one point of the panel-shaped touch input unit of the front surface is tapped with the finger.

### [Document of the prior art]

### [Patent Document]

[Patent Document 1]
Japanese Unexamined Patent Application, First Publication No. 2009-223426

### DISCLOSURE OF INVENTION

### [Problems to be solved by the invention]

In Patent Document 1, a mechanism of receiving two specific operation inputs such as enlargement/reduction of the display of the screen using the panel-shaped touch input unit of the rear surface and the panel-shaped touch input unit of the front surface is shown. However, a general mechanism capable of improving operability while suppressing the size increase of the portable information apparatus is not shown in Patent Document 1.

An object of the present invention is to provide a portable electronic apparatus, an input operation reception method, and a program capable of solving the above-described problem.

### [Means for solving the problem]

The present invention has been made to solve the above-described problem, and a portable electronic apparatus in an aspect of the present invention includes: first and second display screens mutually constituting front and rear surfaces; a display control unit configured to cause the first display screen to display an icon; and an input processing unit configured to receive a touch operation on a display region of the icon performed on the first display screen and a touch operation on a rear surface region of the display region of the icon performed on the second display screen as a pair of input operations.

In addition, an input operation reception method according to an aspect of the present invention is an input operation reception method of a portable electronic apparatus having first and second display screens which mutually constitute front and rear surfaces, the input operation reception method including: a display control step of causing the first display screen to display an icon; and an input processing step of receiving a touch operation on a display region of the icon performed on the first display screen and a touch operation on a rear surface region of the display region of the icon performed on the second display screen as a pair of input operations.

In addition, an input operation reception program according to an aspect of the present invention causes a computer, which controls a portable electronic apparatus having first and second display screens which mutually constitute front and rear surfaces, to execute: a display control step of causing the first display screen to display an icon; and an input processing step of receiving a touch operation on a display region of the icon performed on the first display screen and a touch operation on a rear surface region of the display region of the icon performed on the second display screen as a pair of input operations.

### [Effects of the Invention]

According to the present invention, it is possible to improve operability while preventing an increase in size of a portable information apparatus.

### BRIEF DESCRIPTON OF THE DRAWINGS

FIG. 1 is a schematic block diagram showing a functional configuration of a portable terminal apparatus according to an embodiment of the present invention.
FIG. 2 is a perspective view showing an outline of an external appearance of the portable terminal apparatus according to the embodiment of the present invention viewed from a surface side.
FIG. 3 is a perspective view showing an outline of an external appearance of the portable terminal apparatus according to the embodiment of the present invention viewed from a back surface (rear surface) side.
FIG. 4A is a perspective view showing an example in which housings of the portable terminal apparatus according to the embodiment of the present invention are opened.
FIG. 4B is a perspective view showing an example in which the housings of the portable terminal apparatus according to the embodiment of the present invention are folded halfway.
FIG. 4C is a perspective view showing an example in which the housings of the portable terminal apparatus according to the embodiment of the present invention are folded completely.
FIG. 5A is a diagram showing an example of a rear surface region of a display region of an icon of the portable terminal apparatus according to the embodiment of the present invention.
FIG. 5B is a perspective view of the portable terminal apparatus according to the embodiment of the present invention viewed from a back surface side (second display screen side) of a first display screen.
FIG. 6 is a diagram showing a configuration example of data acquired by an opposite-process acquisition unit of the portable terminal apparatus according to the embodiment of the present invention.
FIG. 7 is a diagram showing an example of a setting screen in the portable terminal apparatus according to the embodiment of the present invention.
FIG. 8 is a diagram showing an example of a screen displayed by a first display unit on a first display screen in the portable terminal apparatus according to the embodiment of the present invention.
FIG. 9 is a diagram showing an example of a region set by the second display unit on a second display screen in the portable terminal apparatus according to the embodiment of the present invention.
FIG. 10 is a diagram showing part of an application program which detects an opposite process in the portable terminal apparatus according to the embodiment of the present invention.
FIG. 11 is a flowchart showing an example of a processing procedure of the portable terminal apparatus when an opposite-process acquisition unit acquires the opposite process from the application program in the portable terminal apparatus according to the embodiment of the present invention.
FIG. 12 is a flowchart showing an example of a processing procedure of the portable terminal apparatus when an application processing unit executes an application program in the portable terminal apparatus according to the embodiment of the present invention.
FIG. 13A is a diagram showing a first example of an icon displayed by the display control unit on the first display screen in the portable terminal apparatus according to the embodiment of the present invention.
FIG. 13B is a diagram showing a second example of the icon displayed by the display control unit on the first display screen in the portable terminal apparatus according to the embodiment of the present invention.
FIG. 13C is a diagram showing a third example of the icon displayed by the display control unit on the first display screen in the portable terminal apparatus according to the embodiment of the present invention.
FIG. 13D is a diagram showing a fourth example of the icon displayed by the display control unit on the first display screen in the portable terminal apparatus according to the embodiment of the present invention.
FIG. 14A is a diagram showing a display example of the first display screen in a character input operation in which front and rear surface regions form a pair in the portable terminal apparatus according to the embodiment of the present invention.
FIG. 14B is a diagram showing a display example of the second display screen in the character input operation in which the front and rear surface regions form the pair in the portable terminal apparatus according to the embodiment of the present invention.

### [Description of Embodiments]

Hereinafter, an embodiment of the present invention will be described as an example in which the present invention is applied to a portable terminal apparatus with reference to the drawings. The present invention is applicable to various portable terminal apparatuses such as a mobile phone and a portable information terminal apparatus. However, an application range of the present invention is not limited to the portable terminal apparatus. For example, the present invention can be applied to various portable information apparatuses such as an independent (that is, a non-terminal type) game machine and an electronic dictionary.

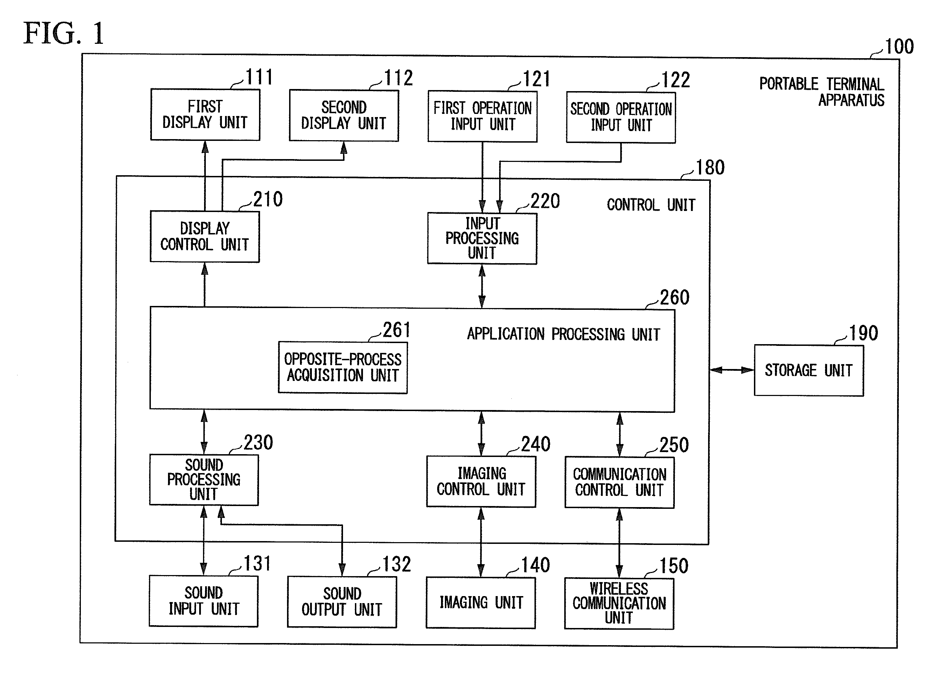

FIG. 1 is a schematic block diagram showing a functional configuration of a portable terminal apparatus according to the embodiment of the present invention. As illustrated in FIG. 1, the portable terminal apparatus 100 includes a first display unit 111, a second display unit 112, a first operation input unit 121, a second operation input unit 122, a sound input unit 131, a sound output unit 132, an imaging unit 140, a wireless communication unit 150, a control unit 180, and a storage unit 190. The control unit 180 includes a display control unit 210, an input processing unit 220, a sound processing unit 230, an imaging control unit 240, a communication control unit 250, and an application processing unit 260. The application processing unit 260 includes an opposite-process acquisition unit 261.

The portable terminal apparatus 100, for example, is a portable information terminal apparatus, and provides various types of functions such as an Internet browsing function and an electronic mail function according to the user's operation.

The first display unit 111, for example, has a display screen (first display screen) such as a liquid crystal display or an organic electro-luminescence (EL) display, and displays various types of images such as a moving image, a still image, and text (characters) according to control of the display control unit 210.

The second display unit 112, for example, has a display screen (second display screen) such as a liquid crystal display or an organic EL display, and displays various types of images such as a moving image, a still image, and text (characters) according to control of the display control unit 210.

As will be described later, the first and second display screens can be mutually disposed on the front and rear surfaces.

The first operation input unit 121 has a touch sensor (touch panel) provided on the display screen of the first display unit 111, and receives the user's operation. Upon detecting a touch operation on the display screen of the first display unit 111, the first operation input unit 121 outputs a signal representing a touch position (a position touched in the display screen) to the input processing unit 220.

The second operation input unit 122 has a touch sensor (touch panel) provided on the display screen of the second display unit 112, and receives the user's operation. Upon detecting a touch operation on the display screen of the second display unit 112, the second operation input unit 122 outputs a signal representing a touch position to the input processing unit 220.

The sound input unit 131 has a microphone, collects an ambient sound, converts the collected ambient sound into a sound signal, and outputs the sound signal to the sound processing unit 230.

The sound output unit 132 has a speaker, converts a sound signal output in an analog electrical signal from the sound processing unit 230 into sound, and outputs the sound.

The imaging unit 140 performs imaging with a camera and outputs obtained image data to the imaging control unit 240.

The wireless communication unit 150 is connected to a mobile phone communication network (a wireless communication network for a mobile phone provided by a communication provider) by communicating with a wireless base station. Specifically, the wireless communication unit 150 performs a modulation process on a signal output from the communication control unit 250 to transmit the modulated signal in a wireless signal and performs a demodulation process on a received wireless signal to output the demodulated signal to the communication control unit 250. For example, the wireless communication unit 150 transmits and receives electronic mail data in a wireless signal.

The control unit 180 controls the respective units of the portable terminal apparatus 100 to execute various types of functions. The control unit 180, for example, causes a central processing unit (CPU) provided in the portable terminal apparatus 100 to read a program from a memory provided in the portable terminal apparatus 100 and execute the read program, so that various types of functions are implemented.

The display control unit 210 controls the first display unit 111 and the second display unit 112 to display various types of images. Specifically, the display control unit 210 causes the first display unit 111 to display an image by generating a screen display signal to output the generated signal to the first display unit 111 based on moving-image data, still-image data, text data, or the like output from the application processing unit 260 and causes the second display unit 112 to display an image by generating a screen display signal to output the generated signal to the second display unit 112. In particular, the display control unit 210 causes the first display screen of the first display unit 111 to display an icon.

The input processing unit 220 outputs a signal according to an operation received by the first operation input unit 121 or the second operation input unit 122 to the application processing unit 260.

For example, when a signal representing a touch position in the display screen (first display screen) of the first display unit 111 is output from the first operation input unit 121 in a state in which the first display unit 111 displays an icon, the input processing unit 220 determines whether the icon has been touched. Then, upon determining that the icon has been touched, the input processing unit 220 outputs information representing the touched icon to the application processing unit 260. Also, the icon described here is an image which symbolizes a thing serving as a selection target or a designation target such as a file, a folder, an application program, or a function.

In addition, when a signal representing a touch position on the display screen (second display screen) of the second display unit 112 is output from the second operation input unit 122 in a state in which the second display unit 112 displays the icon, the input processing unit 220 determines whether the icon has been touched. Then, upon determining that the icon has been touched, the input processing unit 220 outputs information representing the touched icon to the application processing unit 260.

In addition, in a state in which the first and second display screens are disposed on the front and rear surfaces, the input processing unit 220 receives a touch operation on a display region of an icon (hereinafter referred to as a "target icon") displayed on the first display screen performed on the first display screen and a touch operation on a rear surface region of the display region of the target icon performed on the second display screen as a pair of input operations.

Here, the pair of input operations are two input operations each indicating one process between a pair of mutually different processes.

In addition, the pair of processes are two processes each having one mutually different attribute among attributes associated in one-to-one correspondence. For example, the pair of processes correspond to mutually opposite processes, processes of a pair of character types, or the like.

Hereinafter, the mutually opposite processes and the pair of character types (reception of input operations of the pair of character types as an example of the processes of the pair of character types) will be described.

For example, the input processing unit 220 receives the touch operation on the display region of the target icon performed on the first display screen and the touch operation on the rear surface region in the display region of the target icon performed on the second display screen as the input operations indicating the opposite processes.

Further, for example, the input processing unit 220 receives the touch operation on the display region of the target icon performed on the first display screen as an input operation indicating a first process acquired by the opposite-process acquisition unit 261 and receives the touch operation on the rear surface region for the display region of the target icon performed on the second display screen as an input operation indicating a second process acquired by the opposite-process acquisition unit 261 as a process opposite to the first process.

Here, the opposite processes are two processes having opposite effects on a parameter value (for example, a variable value) of an operation target. The opposite processes include a set of a process of increasing a value of a quantitative parameter and a process of decreasing the value of the quantitative parameter and a set of a process of turning ON a value of a parameter which can take at least two values of ON (on state) and OFF (off state) and a process of turning OFF the quantitative parameter.

As an example of the process of increasing the value of the quantitative parameter and the process of decreasing the value of the quantitative parameter, there are a process of raising (increasing) a sound volume output by the sound output unit 132 and a process of lowering (decreasing) the sound volume, a process of brightening the brightness of the display screen of the first display unit 111 or the second display unit 112 (increasing a luminance value) and a process of darkening the brightness of the display screen (decreasing the luminance value), a process (accelerator operation) of increasing a speed of a vehicle operated by a user in a game and a process (brake operation) of decreasing the speed of the vehicle, and so on.

In addition, as an example of the process of turning ON a value of a parameter which can take the at least two values of ON (on state) and OFF (off state) and the process of turning OFF the parameter which can be taken, there are a process of turning ON a sound output of the sound output unit 132 and a process of turning OFF a sound output of the sound output unit 132, a process of setting a display of a help message of a time at which a certain application is executed to ON (display) and a process of setting the display of the help message to OFF (non-display), and so on.

In addition, for example, the input processing unit 220 receives the touch operation on the display region of the target icon performed on the first display screen and the touch operation on the rear surface region in the display region of the target icon performed on the second display screen as character input operations of a pair of character types.

The pair of character types described here are two mutually different character types and are character types in which characters are associated in one to one correspondence. For example, hiragana and katakana, a capital letter and a lowercase letter, a full size and half size letter or number, etc. correspond to pairs of character types.

The sound processing unit 230 causes the sound output unit 132 to output sound by converting sound data output from the application processing unit 260 into an electrical signal and outputting the electrical signal to the sound output unit 132. In addition, the sound processing unit 230 converts the electrical signal output after the sound input unit 131 has collected sound into sound data and outputs the sound data to the application processing unit 260.

The communication control unit 250 performs a process of encoding, etc. on data output from the application processing unit 260, and causes the encoded data to be modulated and transmitted in a wireless signal by outputting the encoded data to the wireless communication unit 150. In addition, the communication control unit 250 extracts data by performing a process of decoding, etc. on a signal received and demodulated by the wireless communication unit 150 and outputs the data to the application processing unit 260. For example, the communication control unit 250 performs a process of encoding, etc. on electronic mail data output from the application processing unit 260 to output the encoded data to the wireless communication unit 150, and performs a process of decoding, etc. on a signal received and demodulated by the wireless communication unit 150 to extract data such as electronic mail data, and outputs the extracted data to the application processing unit 260.

The imaging control unit 240 performs processing of a control signal of the imaging unit 140 or a signal output from the imaging unit 140. For example, the imaging control unit 240 converts the electrical signal output from the imaging unit 140 into image data of a moving-image frame or a still image and outputs the image data to the application processing unit 260.

In addition, the imaging control unit 240 adjusts a focus or zoom of a camera of the imaging unit 140 according to an instruction from the application processing unit 260.

The application processing unit 260 provides various functions such as an Internet browsing function and an electronic mail function by executing an application program.

The opposite-process acquisition unit 261 acquires first and second processes including mutually opposite processes. Specific content of the first and second processes will be described later.

The storage unit 190, for example, stores various types of data in a storage region of a memory provided in the portable terminal apparatus 100. For example, the storage unit 190 stores various types of programs to be executed by the CPU provided in the portable terminal apparatus 100 in advance.

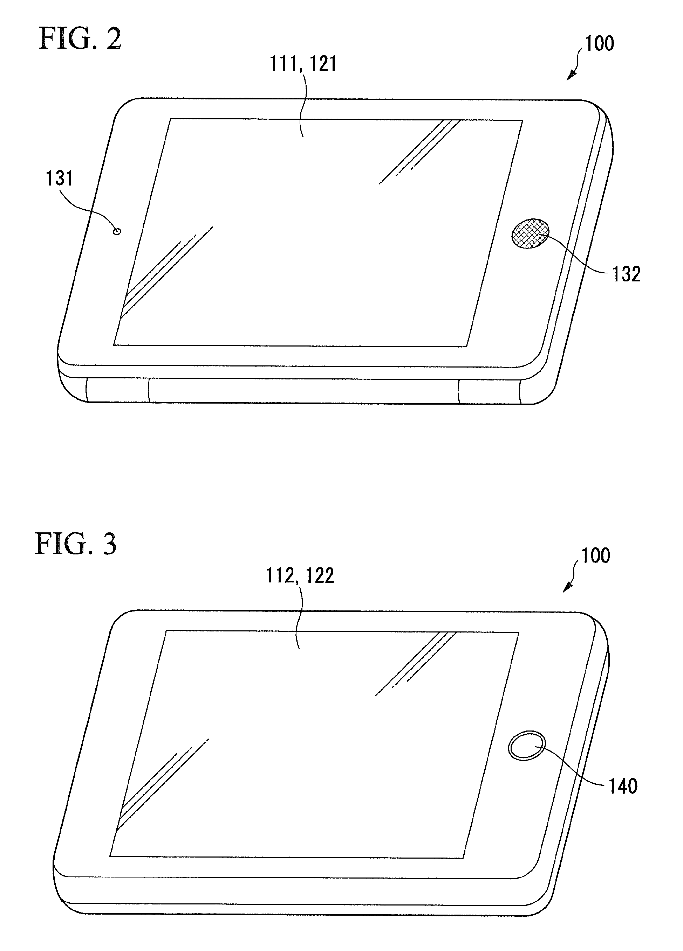

Next, the layout of the first and second display screens will be described with reference to Figs. 2 to 4C.

FIG. 2 is a perspective view showing an outline of an external appearance of the portable terminal apparatus 100 viewed from a surface side. In FIG. 2, a touch panel type display screen corresponding to the display screen (first display screen) of the first display unit 111 and a touch sensor of the first operation input unit 121, a microphone of the sound input unit 131, and a speaker of the sound output unit 132 are provided on a housing surface of the portable terminal apparatus 100.

FIG. 3 is a perspective view showing an outline of an external appearance of the portable terminal apparatus 100 viewed from a back surface side (rear surface side). In FIG. 3, a touch panel type display screen corresponding to the display screen (second display screen) of the second display unit 112 and a touch sensor of the second operation input unit 122, and an imaging lens of the imaging unit 140 are provided on the housing back surface of the portable terminal apparatus 100.

Here, the display screen (second display screen) of the back surface side illustrated in FIG. 3 is disposed on the rear surface side with respect to the display screen (first display screen) of the surface side illustrated in FIG. 2.

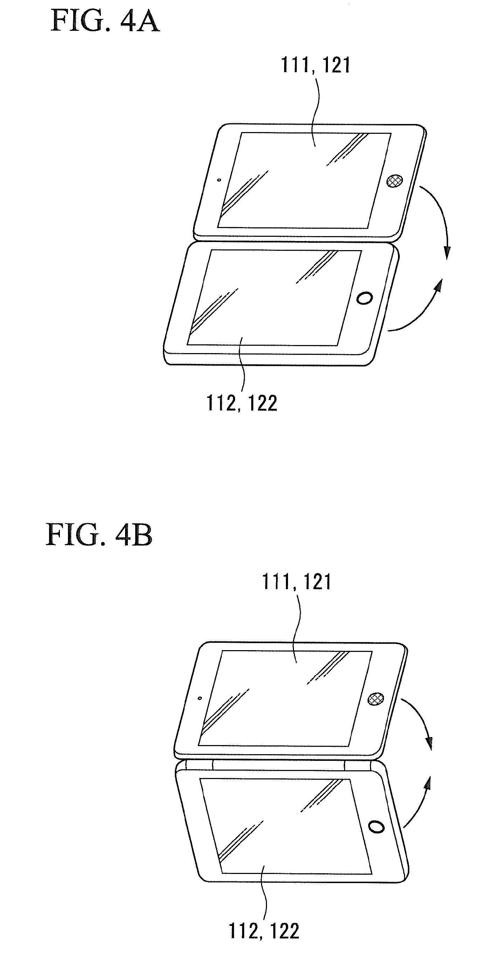

Figs. 4A to 4C are perspective views each showing a method of folding the housings of the portable terminal apparatus 100. FIG. 4A illustrates a state in which the portable terminal apparatus 100 is opened. As illustrated in FIG. 4A, the portable terminal apparatus 100 includes a housing (hereinafter referred to as a "first housing") on which the first display screen is disposed and a housing (hereinafter referred to as a "second housing") on which the second display screen is disposed.

The first and second housings are coupled to be foldable using a hinge.

In the portable terminal apparatus 100, the housings can be folded (the first and second housings can be folded) by setting the first and second display screens as inner sides, and the housings can be folded by setting the first and second display screens as outer sides. By carrying the portable terminal apparatus 100 in a state in which the housings are folded by setting the first and second display screens as the inner sides, it is possible to prevent scratches and stains from sticking to the display screens.

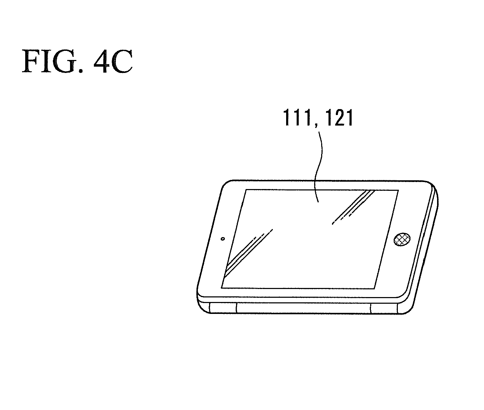

FIG. 4B illustrates a state in which the housings of the portable terminal apparatus 100 are folded halfway by setting the first and second display screens as the outer sides. In addition, FIG. 4C illustrates a state in which the housings of the portable terminal apparatus 100 are folded completely by setting the first and second display screens as the outer sides. In a state in which the housings of the portable terminal apparatus 100 are folded by setting the first and second display screens as the outer sides, the second display screen is referred to as the rear surface of the first display screen. In the state in which the housings of the portable terminal apparatus 100 are folded by setting the first and second display screens as the outer sides, the first and second display screens mutually constitute the front and rear surfaces.

The user can perform an input operation on the portable terminal apparatus 100 according to a touch operation for the first and second display screens.

In this manner, the portable terminal apparatus 100 can implement a state in which the first and second display screens constitute the front and rear surfaces by folding its housings. However, an application range of the present invention is not limited to a portable information apparatus having a foldable housing as illustrated in Figs. 4A to 4C, and the present invention is also applicable to various portable information apparatuses having first and second display screens mutually constituting front and rear surfaces. For example, the portable information apparatus may have one housing, and first and second display screens may be fixedly disposed on a surface and a back surface (rear surface) of the housing, respectively.

Next, a state in which the housings of the portable terminal apparatus 100 are folded by setting the first and second display screens as the outer sides as illustrated in FIG. 4C will be described. In this state, the first and second display screens mutually constitute the front and rear surfaces.

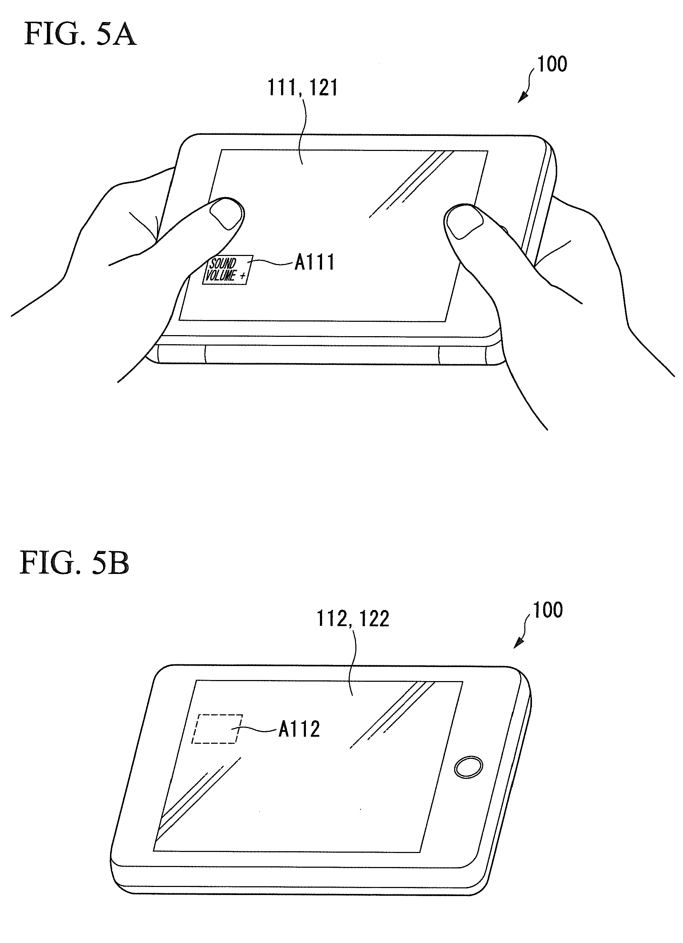

Next, a touch operation on a region corresponding to a display region of an icon will be described with reference to FIG. 5A.

Figs. 5A and 5B are diagrams each showing an example of the region corresponding to the display region of the icon. FIG. 5A is a perspective view of the portable terminal apparatus 100 viewed from the surface (front surface) side (a first display screen side). The icon is displayed on a region A111 of the first display screen. The icon is an example of a target icon, and the region A111 is an example of a display region of the target icon.

In the example of the FIG. 5A, an icon of a sound volume + (increase) is displayed as the target icon.

The display region A111 of the target icon is set in a region of a touch operation of the sound volume +. When the display region A111 is touched, the application processing unit 260 raises the sound volume output by the sound output unit 132. For example, the application processing unit 260 raises the sound volume output by the sound output unit 132 by outputting sound data representing a higher sound volume to the sound processing unit 230.

FIG. 5B is a perspective view of the portable terminal apparatus 100 viewed from the back surface (rear surface) (a second display screen side) side. A region A112 illustrated in FIG. 5B is a rear surface region of the region A111, and the region A112 represented by a dashed line is an example corresponding to a display region of a target icon of the region A111.

In the example of FIG. 5B, the region A 112 is set in a region of the touch operation of the sound volume - (decrease). When the region A112 is touched, the application processing unit 260 lowers the sound volume output by the sound output unit 132. For example, the application processing unit 260 lowers the sound volume output by the sound output unit 132 by outputting sound data representing a lower sound volume to the sound processing unit 230.

Here, a process of raising the sound volume output by the sound output unit 132 and a process of lowering the sound volume output by the sound output unit 132 are an example of opposite processes. Accordingly, the input processing unit 220 receives a touch operation on the display region A111 of the target icon performed on the first display screen and a touch operation on the region A112 corresponding to the display region of the target icon performed on the second display region as input operations indicating the opposite processes.

Also, the touch operation on the region (for example, the region A111) set on the first display screen can be performed with a thumb finger, for example, in a state in which the portable terminal apparatus 100 is held with two hands as illustrated in FIG. 5A. Alternatively, the portable terminal apparatus 100 may be held with one hand and the region A111 may be touched with an index finger or the like of the other hand.

In addition, the touch operation on a region (for example, the region A112) set on the second display screen can be performed with any one of an index finger, a middle finger, a ring finger, and a little finger in a state in which the portable terminal apparatus 100 is held with two hands by setting the first display screen side as the top (the side viewed by the user) as illustrated in FIG. 5A. Alternatively, the portable terminal apparatus 100 may be held with one hand by setting the first display screen as the top and the region A112 may be touched with the index finger or the like of the other hand. In this manner, the user can perform the touch operation on the region set on the second display screen without reversing the portable terminal apparatus 100.

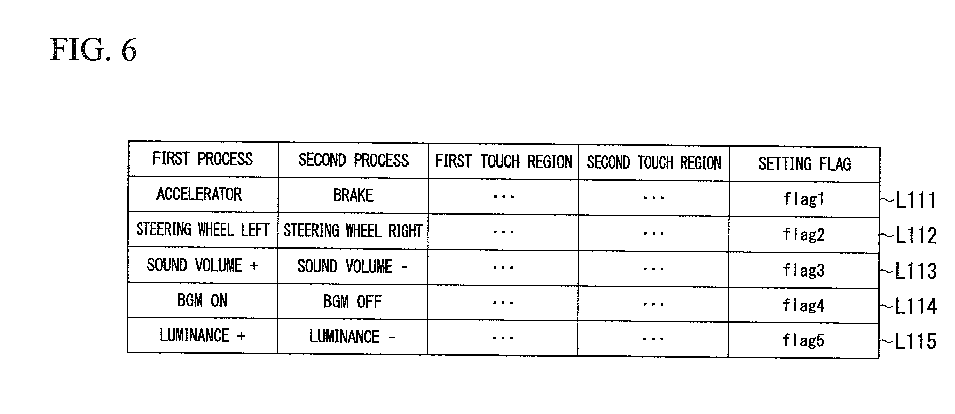

Next, the acquisition of an opposite process by the opposite-process acquisition unit 261 will be described with reference to FIG 6.

FIG. 6 is a data configuration diagram showing a configuration example of data acquired by the opposite-process acquisition unit 261.

Data (hereinafter referred to as "opposite-process data") illustrated in FIG. 6 has a structure of a table format and each row corresponds to one set of opposite processes.

Then, each row includes a field of a first process, a field of a second process, a field of a first touch region, a field of a second touch region, and a field of a setting flag.

A name representing the first process is stored in the field of the first process, and a name representing the second process is stored in the field of the second process. The first and second processes are mutually opposite processes.

In addition, in the field of the first touch operation, a region (position information on the first display screen (for example, coordinate data in the first display screen)) in which the touch operation indicating the first process is received is stored. The first touch region is on the first display screen. Hereinafter, the region in which the touch operation is received is referred to as a "touch region." In addition, the touch region of the touch operation indicating a predetermined process (written here as a "process A") is referred to as the "touch region of the process A." In addition, position information (for example, the coordinate data in the first display screen) when the touch region of the touch operation indicating the second process is provided on the first display screen is stored in the field of the second touch region.

In addition, a variable name of a flag (hereinafter referred to as a "setting flag") representing whether to set the touch region of the second process at a position (on the second display screen) on the rear surface of the touch region of the first process is stored in the field of the setting flag. Here, a value "YES" of the setting flag represents that the touch region of the second process is set at the position of the rear surface of the touch region of the first process in the first display screen. On the other hand, a value "NO" of the setting flag represents that the touch region of the second process is set on the first display screen.

Here, an example of opposite-process data to be acquired by the opposite-process acquisition unit 261 in a game of a vehicle race is illustrated in FIG 6.

Thus, a name "accelerator" representing a process (hereinafter referred to as "accelerator processing") of increasing a speed of a vehicle as the first process is stored in the field of the first process of a row L111. In addition, a name "brake" representing a process (hereinafter referred to as "brake processing") of decreasing the speed of the vehicle as the second process is stored in the field of the second process of the row L111.

In addition, position information of the touch region of the touch operation indicating the accelerator processing is stored in the field of the first touch region of the row L111. In addition, position information when the touch region of the touch operation indicating the brake processing is provided on the first display screen is stored in the field of the second touch region of the row L111.

In addition, a variable name "flag1" of the setting flag representing whether to set the touch region of the brake processing at a position of the rear surface of the touch region of the accelerator processing is stored in the field of the setting flag of the row L111.

In addition, a name "steering wheel left" representing a process (hereinafter referred to as "steering wheel left processing") of varying a traveling direction of the vehicle to the left as the first process is stored in the field of the first process of the row L112. In addition, a name "steering wheel right" representing a process (hereinafter referred to as "steering wheel right processing") of varying the traveling direction of the vehicle to the right as the second process is stored in the field of the second process of the row L112.

In addition, position information of the touch region of the touch operation indicating the steering wheel left processing is stored in the field of the first touch region of the row L112. In addition, position information when the touch region of the touch operation indicating the steering wheel right processing is provided on the first display screen is stored in the field of the second touch region of the row L112.

In addition, a variable name "flag2" of the setting flag representing whether to set the touch region of the steering wheel right processing at a position on the rear surface of the touch region of the steering wheel left processing is stored in the field of the setting flag of the row L112.

In addition, a name "sound volume +" representing a process (hereinafter referred to as a "sound-volume increasing process") of raising a sound volume output by the sound output unit 132 is stored as the first process in the field of the first process of a row L113. In addition, a name "sound volume -" representing a process (hereinafter referred to as a "sound-volume decreasing process) of lowering the sound volume output by the sound output unit 132 is stored as the second process in the field of the second process of the row L113.

In addition, position information of the touch region of the touch operation indicating the sound-volume increasing process is stored in the field of the first touch region of the row L113. In addition, position information when the touch region of the touch operation indicating the sound-volume decreasing process is provided on the first display screen is stored in the field of the second touch region of the row L113.

In addition, a variable name "flag 3" of the setting flag representing whether to set the touch region of the sound-volume decreasing process at a position on the rear surface of the touch region of the sound-volume increasing process is stored in the field of the setting flag of the row L113.

In addition, a name "BGM ON" representing a process (hereinafter referred to as a "BGM on process") of outputting Back Ground Music (BGM) is stored as the first process in the field of the first process of a row L114. In addition, a name "BGM OFF" representing a process (hereinafter referred to as a "BGM off process") of preventing the BGM from being output is stored as the second process in the field of the second process of the row L114.

In addition, position information of the touch region of the touch operation indicating the BGM on process is stored in the field of the first touch region of the row L114. In addition, position information when the touch region of the touch operation indicating the BGM off process is provided on the first display screen is stored in the field of the second touch region of the row L114.

In addition, a variable name "flag4" of the setting flag representing whether to set the touch region of the BGM off process at a position on the rear surface of the touch region of the BGM on process is stored in the field of the setting flag of the row L114.

In addition, a name "luminance +" representing a process (hereinafter referred to as a "luminance increasing process") of brightening the brightness of the display screens of the first display unit 111 and the second display unit 112 is stored as the first process in the field of the first process of a row L115. In addition, a name "luminance -" representing a process (hereinafter referred to as a "luminance decreasing process") of darkening the brightness of the display screens of the first display unit 111 and the second display unit 112 is stored as the second process in the field of the second process of the row L115.

In addition, position information of the touch region of the touch operation indicating the luminance increasing process is stored in the field of the first touch region of the row L115. In addition, position information when the touch region of the touch operation indicating the luminance decreasing process is provided on the first display screen is stored in the field of the second touch region of the row L115.

In addition, a variable name "flag5" of the setting flag representing whether to set the touch region of the luminance decreasing process at a position on the rear surface of the touch region of the luminance increasing process is stored in the field of the setting flag of the row L115.

The opposite-process acquisition unit 261 acquires opposite processes (the first and second processes) by acquiring opposite-process data thereof. Then, the opposite-process acquisition unit 261 receives a setting of whether to set the touch region in which the touch operation indicating the second operation is received in a region on the rear surface of the display region of the icon of the first operation by causing the display screen of the first display unit 111 to display a setting screen based on the acquired opposite-process data.

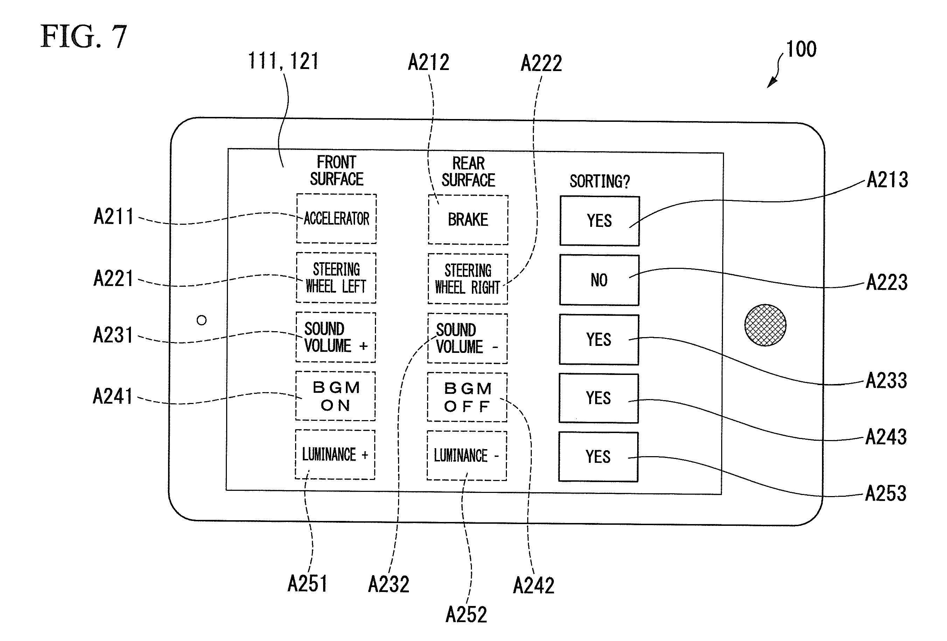

Next, the setting of the region on the second display screen corresponding to the display region of the icon will be described with reference to Figs. 7 to 9.

FIG. 7 is an explanatory diagram showing an example of a setting screen of whether to set the touch region in which the touch operation indicating the second operation is received in a rear surface region of the display region of the icon of the first operation. In FIG 7, an example of the setting screen displayed by the first display unit 111 when opposite data illustrated in FIG. 6 is acquired by the opposite-process acquisition unit 261 is illustrated.

In each row of the setting screen, names representing the first and second processes which are opposite processes and a touch region in which a setting of whether to set a touch region of the second process in the rear surface region of the display region of the icon of the first process is received are shown.

Specifically, the name "accelerator" stored in the field of the first process in the row L111 of FIG. 6 is shown in a region A211. In addition, the name "brake" stored in the field of the second process in the row L111 is shown in a region A212.

Then, a value of the variable flag1 shown in the field of the setting flag in the row L111 is shown (the name is stored) in a region A213 provided in the same row as the regions A211 and A212. The value of the variable flag1, for example, is switched between "YES" and "NO" every time the first operation input unit 121 detects the touch operation on the region A213 (that is, the value of flag1 is set to "NO" if the first operation input unit 121 receives the touch operation on the region A213 when the value of flag1 is "YES," and the value of flag1 is set to "YES" if the first operation input unit 121 receives the touch operation on the region A213 when the value of flag1 is "NO").

In addition, the name "steering wheel left" stored in the field of the first process in the row L112 of FIG. 6 is shown in a region A221. In addition, the name "steering wheel right" stored in the field of the second process in the row L112 is shown in a region A222.

Then, a value of the variable flag2 shown in the field of the setting flag in the row L112 is shown in a region A223 provided in the same row as the regions A221 and A222. For example, the value of the variable flag2 is switched between "YES" and "NO" every time the first operation input unit 121 detects the touch operation on the region A223.

In addition, the name "steering wheel left" stored in the field of the first process in the row L112 of FIG. 6 is shown in the region A221. In addition, the name "steering wheel right" stored in the field of the second process in the row L112 is shown in the region A222.

Then, a value of the variable flag2 shown in the field of the setting flag in the row L112 is shown in the region A223 provided in the same row as the regions A221 and A222. For example, the value of the variable flag2 is switched between "YES" and "NO" every time the first operation input unit 121 detects the touch operation on the region A223.

In addition, the name "sound volume +" stored in the field of the first process in the row L113 of FIG. 6 is shown in a region A231. In addition, the name "sound volume -" stored in the field of the second process in the row L113 is shown in a region A232.

Then, a value of the variable flag3 shown in the field of the setting flag in the row L113 is shown in a region A233 provided in the same row as the regions A231 and A232. For example, the value of the variable flag3 is switched between "YES" and "NO" every time the first operation input unit 121 detects the touch operation on the region A233.

In addition, the name "BGM ON" stored in the field of the first process in the row L114 of FIG. 6 is shown in a region A241. In addition, the name "BGM OFF" stored in the field of the second process in the row L114 is shown in a region A242.

Then, a value of the variable flag 4 shown in the field of the setting flag in the row L114 is shown in the region A243 provided in the same row as the regions A241 and A242. For example, the value of the variable flag4 is switched between "YES" and "NO" every time the first operation input unit 121 detects the touch operation on the region A243.

In addition, the name "luminance +" stored in the field of the first process in the row L115 of FIG. 6 is shown in a region A251. In addition, the name "luminance -" stored in the field of the second process in the row L115 is shown in a region A252.

Then, a value of the variable flag5 shown in the field of the setting flag in the row L115 is shown in a region A253 provided in the same row as the regions A251 and A252. For example, the value of the variable flag5 is switched between "YES" and "NO" every time the first operation input unit 121 detects the touch operation on the region A253.

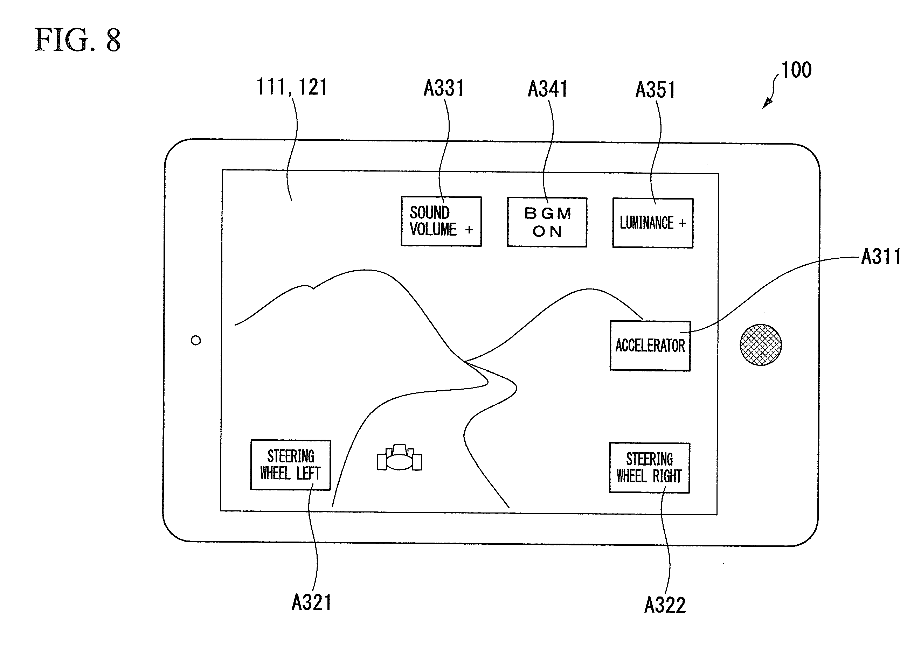

FIG. 8 is a diagram showing an example of a screen displayed by the first display unit 111 on the first display screen. In FIG. 8, an example of a screen of a game displayed by the first display unit 111 when the setting illustrated in FIG. 7 is performed is illustrated.

In FIG. 8, the touch region of the accelerator processing for the first operation is set based on the row L111 of FIG. 6 in the region A311. The region A311 is set at the position shown in the first touch region of the row L111. In addition, the icon of the name "accelerator" shown in the field of the first process of the row L111 is shown in the region A311. On the other hand, because the value of the variable flag1 is "YES" in FIG. 7, the touch region of the brake processing is not set as the second operation in the first display screen. In this case, it is set on the second display screen.

In addition, the touch region of the steering wheel left processing serving as the first operation is set based on the row L112 of FIG. 6 in a region A321. This region A321 is set at a position shown in the first touch region of the row L112. In addition, the icon of the name "steering wheel left" shown in the field of the first process of the row L112 is shown in the region A321.

In addition, because the value of the variable flag2 is set to "NO" in FIG. 7, the touch region of the steering wheel right processing for the second operation is also set in the region A322 of the first display screen. This region A322 is set at a position shown in the second touch region of the row L112. In addition, the icon of the name "steering wheel right" shown in the field of the second process of the row L112 is shown in the region A322.

In addition, the touch region of the sound-volume increasing process serving as the first operation is set based on the row L113 of FIG. 6 in a region A331. This region A331 is set at a position shown in the first touch region of the row L113. In addition, the icon of the name "sound volume +" shown in the field of the first process of the row L113 is shown in the region A331. On the other hand, because the value of the variable flag3 is set to "YES" in FIG 7, the touch region of the sound-volume decreasing process for the second operation is not set in the first display screen.

In addition, the touch region of the BGM on process serving as the first operation is set based on the row L114 of FIG. 6 in a region A341. This region A341 is set at a position shown in the first touch region of the row L114. In addition, the icon of the name "BGM ON" shown in the field of the first process of the row L114 is shown in the region A341. On the other hand, because the value of the variable flag 4 is set to "YES" in FIG. 7, the touch region of the BGM off process for the second operation is not set in the first display screen.

In addition, the touch region of the luminance increasing process for the first operation is set based on the row L115 of FIG. 6 in a region A351. This region A351 is set at a position shown in the first touch region of the row L115. In addition, the icon of the name "luminance +" shown in the field of the first process of the row L115 is shown in the region A351. On the other hand, because the value of the variable flag 5 is set to "YES" in FIG. 7, the touch region of the luminance decreasing process for the second operation is not set in the first display screen.

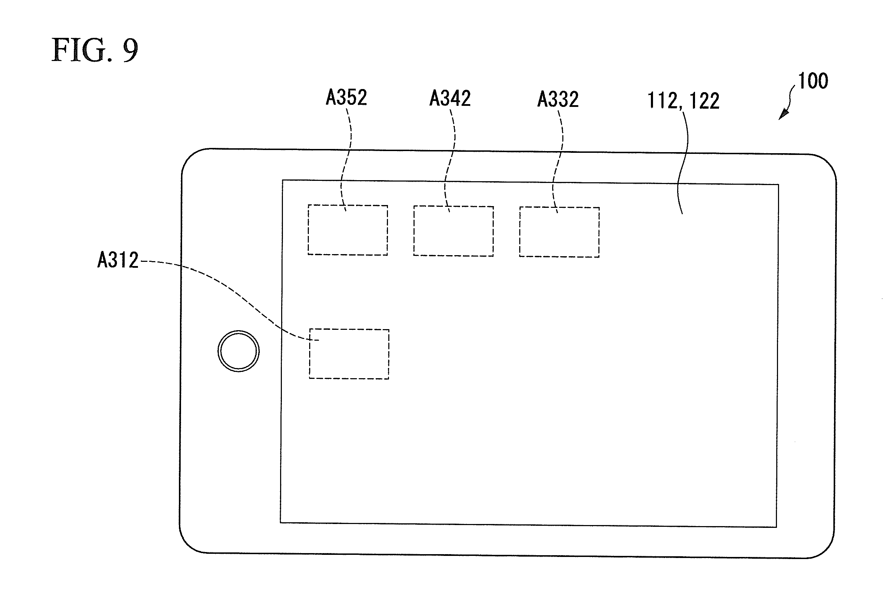

FIG. 9 is an explanatory diagram showing an example of a region set in the second display screen of the second display unit 112.

In FIG. 9, an example of a region set in the second display unit 112 when the setting illustrated in FIG. 7 is performed is illustrated.

In FIG. 9, the touch region of the brake processing for the second operation in the row L111 of FIG. 6 is set in the region A312. The region A312 is set at a position of the back surface of the region 311 of FIG. 8.

In addition, the touch region of the sound-volume decreasing process for the second operation in the row L113 of FIG. 6 is set in a region A332. This region A332 is set at a back surface position of the region 331 of FIG. 8.

In addition, the touch region of the BGM off process for the second operation in the row L114 of FIG. 6 is set in a region A342. This region A342 is set at a back surface position of the region 341 of FIG. 8.

In addition, the touch region of the luminance decreasing process for the second operation in the row L115 of FIG. 6 is set in a region A352. This region A352 is set at a back surface position of the region 351 of FIG. 8.

On the other hand, the touch region of the steering wheel right processing for the second operation in the row L112 of FIG. 6 is set in the first display screen as illustrated in FIG. 8 and is not set in the second display screen.

Also, the second display unit 112 may be configured to display an icon in the touch region set in the second display screen. The second display unit 112 displays the icon and therefore the user can perform the touch operation while checking the icon by reversing the portable terminal apparatus 100. On the other hand, the second display unit 112 does not perform a display and therefore it is possible to reduce a process of performing a screen display and reduce power consumption of the portable terminal apparatus 100.

Also, a method in which the opposite-process acquisition unit 261 acquires an opposite process is not limited to a method of acquiring it from opposite-process data described with reference to FIG. 6. For example, the opposite-process acquisition unit 261 may be configured to acquire the opposite process by analyzing a program.

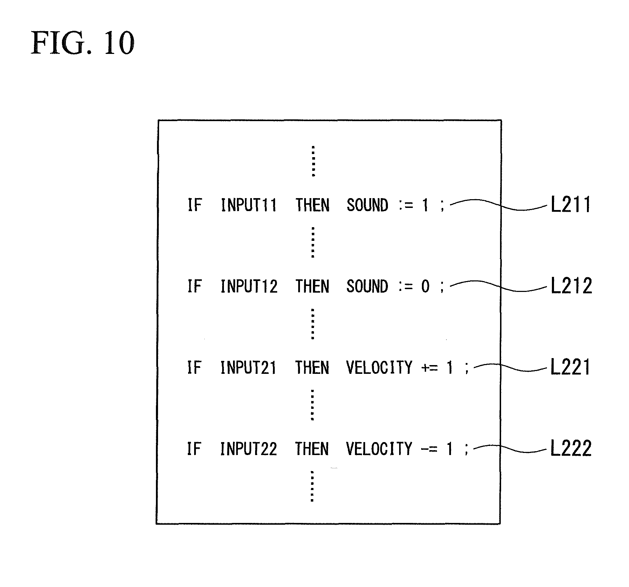

FIG. 10 is an explanatory diagram showing an example of a row in which the opposite-process acquisition unit 261 detects an opposite process in an application program to be executed by the application processing unit 260. In FIG. 10, variables INPUT11, INPUT12, INPUT21, and INPUT22 are associated with operations received by the first operation input unit 121 or the second operation input unit 122.

In addition, a variable SOUND is a binary variable having a value of "0" or "1," and the value "1" of the variable SOUND represents the setting in which BGM is set to ON (BGM is output). On the other hand, the value "0" of the variable SOUND represents the setting in which BGM is set to OFF (BGM is not output).

In addition, a variable VELOCITY is a variable representing a speed of the vehicle in the vehicle race game.

A row L211 represents that the value of the variable SOUND is set to "1" (that is, BGM is set to ON) when the first operation input unit 121 or the second operation input unit 122 detects an operation associated with INPUT11. On the other hand, a row L212 represents that the value of the variable SOUND is set to "0" (that is, BGM is set to OFF) when the first operation input unit 121 or the second operation input unit 122 detects an operation associated with INPUT 12.

In addition, a row L221 represents that a value of the variable VELOCITY is incremented by 1 when the first operation input unit 121 or the second operation input unit 122 detects an operation associated with INPUT21. On the other hand, a row L222 represents that a value of the variable VELOCITY is decremented by 1 when the first operation input unit 121 or the second operation input unit 122 detects an operation associated with INPUT22.

The opposite-process acquisition unit 261 extracts a binary variable having a value set according to the user's operation as in the variable SOUND shown in the rows L211 and L212 or a variable having a value incremented/decremented according to the user's operation as in the variable VELOCITY shown in the rows L221 and L222 as the variable representing the opposite process. Thereby, the opposite-process acquisition unit 261 acquires the opposite process from the application program.

Also, when the opposite-process acquisition unit 261 acquires an opposite process from the application program, for example, it is possible to use Variable Name + "ON" or Variable Name + "Increase" as the name of the first process in the setting screen described with reference to FIG. 7. In addition, Variable Name + "OFF" or Variable Name + "Decrease" can be used as the name of the second process.

For example, the first display unit 111 displays the name of the first process as "SOUND ON" and the name of the second process as "SOUND OFF" on the first display screen for the variable SOUND.

In addition, the first display unit 111 displays the name of the first process as "VELOCITY INCREASE" and the name of the second process as "VELOCITY DECREASE" on the first display screen for the variable VELOCITY

In addition, a plurality of regions are preset, for example, in the vicinity of a left end, an upper end, or the like of the display region, in relation to a position of the touch region in the display screen, and the opposite-process acquisition unit 261 is configured to sequentially allocate the preset position to the extracted opposite process.

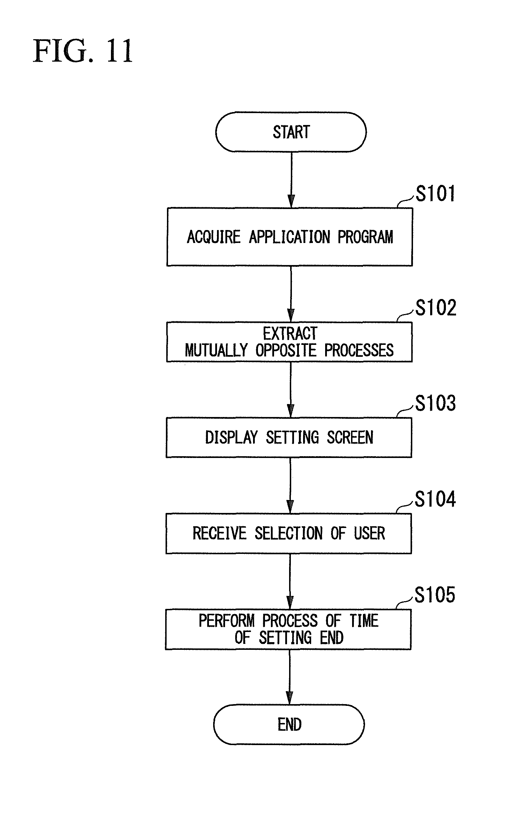

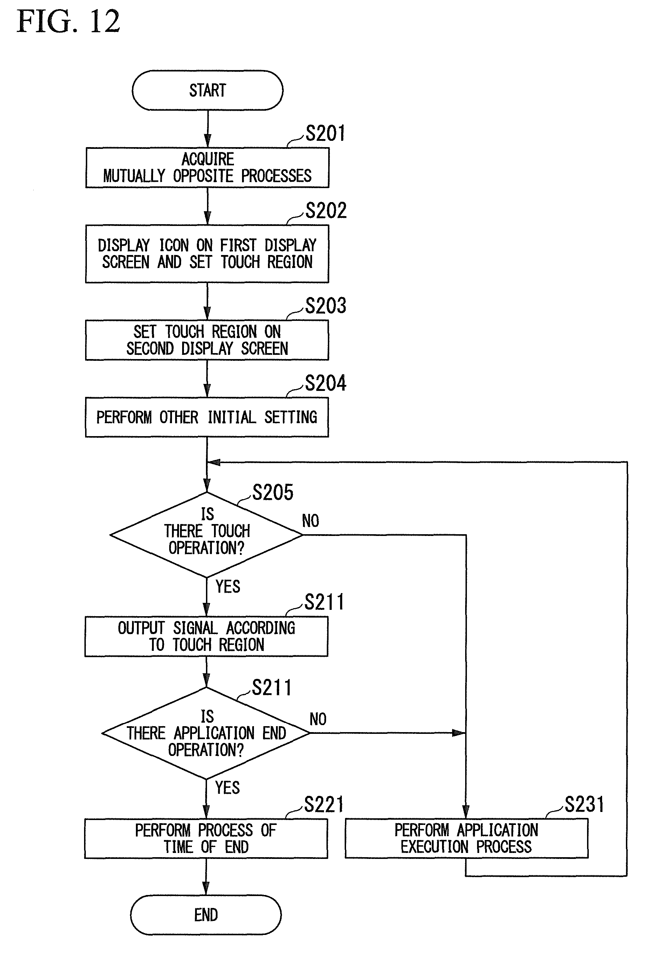

Next, an operation of the portable terminal apparatus 100 will be described with reference to Figs. 11 and 12.

FIG. 11 is a flowchart showing an example of a processing procedure of the portable terminal apparatus 100 when the opposite-process acquisition unit 261 acquires the opposite process from the application program. For example, the portable terminal apparatus 100 starts the process of FIG 11 when acquiring (for example, downloading) a new application program.

In the process of FIG. 11, first, the opposite-process acquisition unit 261 acquires the application program (step S101). For example, the communication control unit 250 extracts the application program from received data of the wireless communication unit 150 to output the extracted application program to the application processing unit 260, and the opposite-process acquisition unit 261 acquires the application program.

Next, the opposite-process acquisition unit 261 extracts (acquires) mutually opposite processes from the application program acquired in step S101 as described with reference to FIG. 9 (step S102).

Then, the opposite-process acquisition unit 261 generates image data of a setting screen for receiving a setting of whether to set a touch region of a second process in a region of a rear surface of a touch region (icon display region) of a first process for the mutually opposite processes extracted in step S102 and outputs the generated image data to the display control unit 210, thereby causing the display screen (first display screen) of the first display unit 111 to display the setting screen (step S103).

Then, the first operation input unit 121 receives a setting operation (the user's selection) of whether to set the touch region of the second process in the region of the rear surface of the touch region (icon display region) of the first process (step S104). Specifically, the first operation input unit 121 receives the touch operation on a region associated with a flag as in the region A213 or A223 of FIG. 7.

Then, the opposite-process acquisition unit 261 sets a value of a setting flag based on the operation received by the first operation input unit 121 as described with reference to FIG. 7.

Then, the portable terminal apparatus 100 performs a process of a time of a setting end such as a display end of the setting screen (step S105). Thereafter, the process of FIG. 11 ends.

FIG. 12 is a flowchart showing an example of a processing procedure of the portable terminal apparatus 100 when the application processing unit 260 executes an application program. For example, upon receiving the user's operation indicating application execution, the portable terminal apparatus 100 starts a process of FIG. 12.

In the process of FIG. 12, first, the application processing unit 260 acquires mutually opposite processes included in the application program (step S201).

Next, the application processing unit 260 causes the display screen (first display screen) of the first display unit 11 to display an icon of a first process or an icon of a second process set to be displayed on the first display screen, and sets display regions of these icons in a touch region (step S202). For example, the application processing unit 260 causes the first display screen to display the icon illustrated in FIG. 8 and sets the display region of the icon in the touch region based on the opposite-process data illustrated in FIG. 6 and the setting in FIG. 7.

In addition, the application processing unit 260 sets the touch region of the second process set to be provided in the rear surface region of the icon display region of the first process in the display screen (second display screen) of the second display unit 112 (step S203). For example, the application processing unit 260 sets the touch region illustrated in FIG. 9 in the second display screen based on the opposite-process data illustrated in FIG. 6 and the setting in FIG. 7.

In addition, the application processing unit 260 performs an initial setting process other than the processes performed in steps S202 and S203 such as displaying an initial screen other than the icon on the first display screen (step S204).

Next, the input processing unit 220 determines whether the first operation input unit 121 or the second operation input unit 122 has received the touch operation (step S205). Upon determining that the touch operation has been received (step S205: YES), the input processing unit 220 outputs a signal according to the touch region on which the touch operation has been performed to the application processing unit 260 (step S211).

Then, the application processing unit 260 determines whether the touch operation is an operation indicating an end of the application based on the signal output from the input processing unit 220 (step S211). When it is determined to be the operation indicating the end of the application (step S211: YES), a process at the application end such as a display end of the application screen is performed (step S221). Thereafter, the process of FIG 12 ends.

On the other hand, upon determining that it is not the operation indicating the end of the application (step S211: NO), the application processing unit 260 executes the process in the application program (step S231). For example, the application processing unit 260 stores the signal output from the input processing unit 220 in a buffer and executes one step of the application program.

Thereafter, the process returns to step S206.

On the other hand, when it is determined that the first operation input unit 121 or the second operation input unit 122 does not receive the touch operation in step S205 (step S205: NO), the process proceeds to step S231. For example, the application processing unit 260 executes one step of the application program.

As described above, the input processing unit 220 receives a touch operation on a display region of a target icon performed on the first display screen and a touch operation on a region of the rear surface in the display region of the target icon performed on the second display screen as a pair of input operations. Thereby, the portable terminal apparatus 100 can receive a plurality of input operations using the first and second display screens without increasing the size of the portable terminal apparatus 100. Accordingly, it is possible to improve operability while suppressing a size increase of the portable terminal apparatus 100.

In addition, the input processing unit 220 receives a pair of input operations rather than operations simply different from each other, and thereof the user can easily associate a pair of input operations executable in a touch operation on the second display screen while viewing the target icon displayed on the first display screen.

In addition, the input processing unit 220 receives the touch operation on the display region of the target icon performed on the first display screen and the touch operation on the display region of the target icon performed on the second display screen as the input operations indicating the opposite processes. In this manner, the touch region of the second process is set in the rear surface region for the display region of the target icon (the icon of the first process) and therefore the user can easily identify a process to be executed by a touch on the rear surface region of the display region of the target icon.

In addition, the opposite-process acquisition unit 261 acquires the first and second processes serving as the mutually opposite processes, and therefore the application processing unit 260 can accurately set a process to be performed by the touch on the rear surface region of the display region of the target icon.

In particular, the opposite-process acquisition unit 261 extracts the mutually opposite processes from the application program, and therefore the application processing unit 260 can accurately set a process to be performed by the touch on the rear surface region of the display region of the target icon without requiring opposite-process data.

Also, the display control unit 210 may be configured to cause the first display screen of the first display unit 111 to display an icon having an attribute different from an icon in which front and rear surface regions are not set as the touch regions of the pair of input operations as an icon in which the front and rear surface regions are set as the touch regions of the pair of input operations.

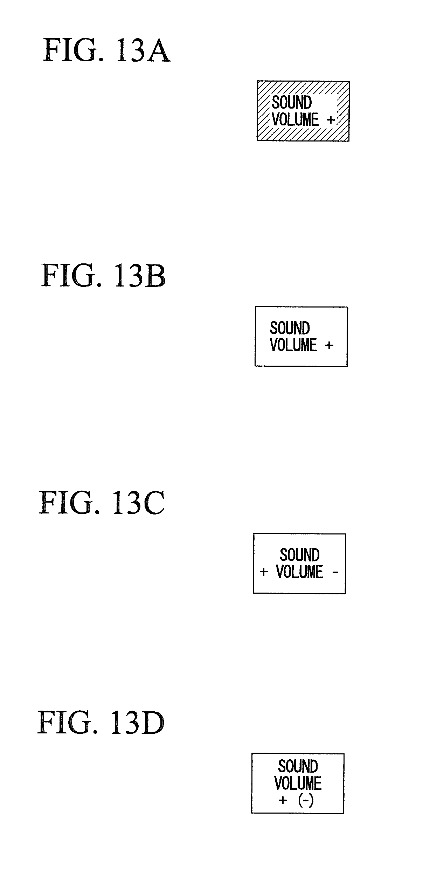

Figs. 13A to 13D are diagrams each showing an example of an icon displayed by the display control unit 210 on the first display screen.

In the example of a sound-volume icon in FIG. 13A, touch regions of a pair of input operations are set in the front and rear surface regions. In the example of the sound-volume icon in FIG. 13B, the front and rear surface regions are not set as the touch regions of the pair of input operations. In the example of FIG. 13B, the touch region of "sound volume -" is also set in the first display screen and the touch regions of the pair of input operations are not set in the rear surface region (second display screen) of the display region of the icon of "sound volume +."

In the example illustrated in FIG. 13A, an icon in which presence/absence of a diagonal line serving as an attribute differs according to whether the front and rear surface regions are set as the touch regions of the pair of input operations is displayed.

In this manner, the display control unit 210 causes the first display screen of the first display unit 111 to display the icon having the attribute different from the icon in which the front and rear surface regions are not set as the touch regions of the pair of input operations as the icon in which the front and rear surface regions are set as the touch regions of the pair of input operations, and therefore the user can easily identify the possibility of the touch operation on the front and rear surface regions.

Also, the above-described attribute used by the display control unit 210 is not limited to the presence/absence of the diagonal line. For example, the display control unit 210 can use various attributes such as character color, thickness of a frame border, and icon size.

Also, the display control unit 210 may be configured to cause the first display screen to display an icon representing both of the pair of input operations as the icon in which the front and rear surface regions are set as the touch regions of the pair of input operations.

Figs. 13C and 13D illustrate examples of an icon (sound volume) representing a pair of input operations in the front and rear surface regions. In the example of FIG. 13C, a touch operation to be received on the first display screen side is preset to be displayed on the left of the icon and a touch operation to be received on the second display screen side is preset to be displayed on the right of the icon. The display control unit causes the first display screen to display the icon according to the setting. In addition, in the example of FIG. 13D, the touch operation to be received on the first display screen side is displayed without brackets and the touch operation to be received on the second display screen side is enclosed and displayed with brackets (not illustrated).

In this manner, the display control unit 210 sets the touch regions of the pair of input operations as the front and rear surface regions and causes the first display screen to display an icon representing both of the pair of input operations, and therefore the user can easily identify the possibility of the touch operation in the front and rear surface regions and further can more accurately identify an input operation performed on each of the first and second display screen sides.

Also, a method in which the display control unit 210 causes the icon to be displayed by distinguishing the touch operation to be received on the first display screen side and the touch operation to be received on the second display screen is not limited to distinguishing according to a display position such as left or right or distinguishing according to presence or absence of brackets. For example, the display control unit 210 can cause the first display screen to display an icon distinguished using a variety of distinguishing methods such as a method that distinguishes an icon from SOMETHING due to a difference in character color.

Also, the portable terminal apparatus 100 may be configured to set each of the front and rear surface regions in touch regions of character input operations of a pair of character types.

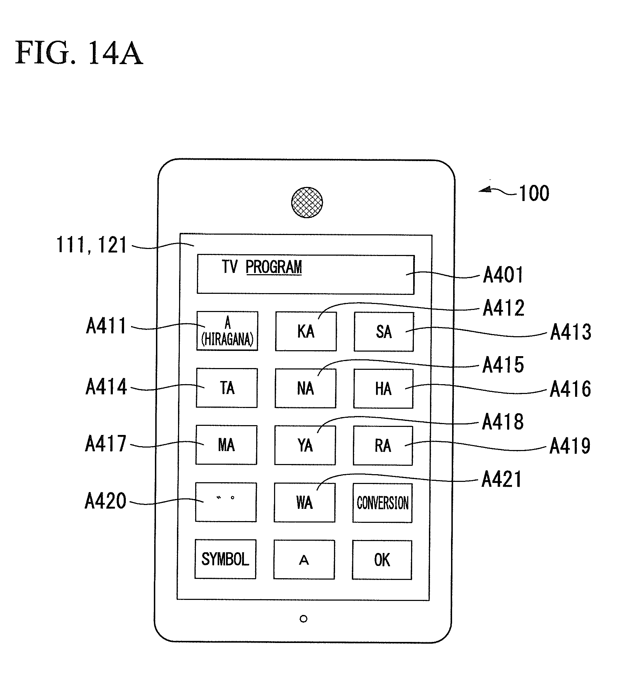

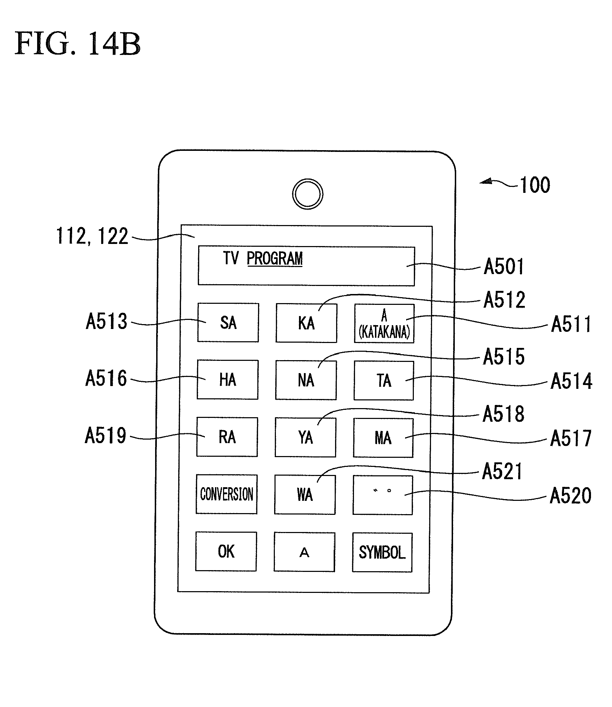

Figs. 14A and 14B are diagrams showing an example in which the front and rear surface regions are display screens in a pair of character input operations.

FIG. 14A illustrates an example of a character input screen set on the first display screen. A region A401 is a display region of an input character string which is an input and converted character string. In addition, each of regions A411 to A421 is a touch region in which a hiragana input operation is received. In each touch region, an icon representing an input to be received is displayed.

For example, the region A411 is a region in which an input operation of an 'a' column of hiragana is received. In the region A411, an icon representing the 'a' column is displayed.

On the other hand, FIG. 14B illustrates an example of the character input screen displayed on the second display screen, and a region A501 is a display region of the input character string which is the same as the region A401. In addition, each of regions A511 to A521 is a touch region in which a katakana input operation is received. For example, the region A511 is a region in which an input operation of an 'a' column of katakana is received. In the region A511, an icon representing the 'a' column is displayed.

Here, the region A511 is a rear surface region of the region A411. In this manner, a touch region in which the same input operation (for example, an input operation of the 'a' column of hiragana) is received in a character type (for example, katakana for hiragana) which forms the pair is set in a corresponding region in the second display region for each of the touch regions A411 to A421 set in the first display screen.

As described above, a target icon is displayed on the first display screen, and a display region of the target icon is set in the touch region of the character input according to the target icon. In addition, on the second display screen, a touch region in which a character input of the character type which forms the pair with the character input to be received in the first display screen is received is set in the rear surface region of the touch region set on the first display screen.

That is, the input processing unit 220 receives the touch operation on the display region of the target icon performed on the first display screen and the touch operation on a region corresponding to the display region of the target icon performed on the second display screen as character input operations of a pair of character types.

Thereby, the user can easily identify a process to be executed by the touch on the front surface region and the rear surface region in the display region of the target icon. For example, the user can easily identify that the rear surface region A511 of the region A411 in which the 'a' column of hiragana is displayed is a touch region in which a character input of the 'a' column of katakana is received.

Also, although the second display unit 112 displays an input character string and an icon according to a touch region in FIG. 14B, these displays may not be performed. In this case, the user can also identify a touch region set on the second display screen by referring to the icon displayed on the first display screen.

When the second display unit 112 does not perform a display, a process of performing a screen display and power consumption of the portable terminal apparatus 100 are reduced.

On the other hand, when the second display unit 112 performs a display, the user can perform a character input operation while checking the touch region and referring to the icon.

Also, processing of each unit may be implemented by recording a program for implementing all or some of the functions of the control unit 180 on a computer-readable recording medium and causing a computer system to read and execute the program recorded on the recording medium. Also, the "computer system" described here is assumed to include an operating system (OS) and hardware such as peripheral devices.

In addition, the "computer system" is assumed to include a homepage providing environment (or displaying environment) when a World Wide Web (WWW) system is used.

In addition, the "computer-readable recording medium" refers to a storage device including a flexible disk, a magneto-optical disc, a read only memory (ROM), a portable medium such as a compact disk (CD)-ROM, and a hard disk embedded in the computer system. Further, the "computer-readable recording medium" is assumed to include a computer-readable recording medium used to dynamically store a program for a short time as in a communication line when the program is transmitted via a network such as the internet or a communication circuit such as a telephone circuit and a computer-readable recording medium used to store the program for a predetermined time as in a volatile memory inside the computer system including a server and a client when the program is transmitted. In addition, the above-described program may be used to implement some of the above-described functions. Further, the program may implement the above-described functions in combination with a program already recorded on the computer system.

Although the embodiments of the present invention have been described above with reference to the drawings, specific configurations are not limited to the embodiments, and a design change, for example, may also be included without departing from the scope of the present invention.

Priority is claimed on Japanese Patent Application No. 2011-210975, filed September 27, 2011, the content of which is incorporated herein by reference.

### INDUSTIRAL APPLICABILITY

According to a portable electronic apparatus related to the present invention, it is possible to improve operability while suppressing a size increase of a portable information apparatus.

### [Description of Reference Symbols]

- 100: Portable terminal apparatus
- 111: First display unit
- 112: Second display unit
- 121: First operation input unit
- 122: Second operation input unit
- 131: Sound input unit
- 132: Sound output unit
- 140: Imaging unit
- 150: Wireless communication unit
- 180: Control unit
- 190: Storage unit
- 210: Display control unit
- 220: Input processing unit
- 230: Sound processing unit
- 240: Imaging control unit
- 250: Communication control unit
- 260: Application processing unit
- 261: Opposite-process acquisition unit

## Claims

1. A portable electronic apparatus comprising:
first and second display screens mutually constituting front and rear surfaces;
a display control unit configured to cause the first display screen to display an icon; and
an input processing unit configured to receive a touch operation on a display region of the icon performed on the first display screen and a touch operation on a rear surface region of the display region of the icon performed on the second display screen as a pair of input operations.

2. The portable electronic apparatus according to claim 1, wherein the input processing unit receives the touch operation on the display region of the icon performed on the first display screen and the touch operation on the rear surface region of the display region of the icon performed on the second display screen as the input operations indicating opposite processes.

3. The portable electronic apparatus according to claim 2, comprising:
an opposite-process acquisition unit configured to acquire first and second processes serving as mutually opposite processes,
wherein the input processing unit receives the touch operation on the display region of the icon performed on the first display screen as the input operation indicating the first process acquired by the opposite-process acquisition unit and receives the touch operation on the rear surface region of the display region of the icon performed on the second display screen as the input operation indicating the second process acquired by the opposite-process acquisition unit.

4. The portable electronic apparatus according to claim 3, wherein the opposite-process acquisition unit acquires the first and second processes serving as the mutually opposite processes by extracting at least one of a binary variable having a value set according to an operation of a user and a variable having a value increased or decreased according to the operation of the user from a program.

5. The portable electronic apparatus according to claim 1, wherein the display control unit causes the first display screen to display an icon having a different attribute from an icon in which the rear surface region is not set as the touch region of the input operation which forms the pair as an icon in which the front surface region and the rear surface region are set as the touch regions of the pair of input operations.

6. The portable electronic apparatus according to claim 5, wherein the display control unit causes the first display screen to display an icon representing both of the pair of input operations as the icon in which the front surface region and the rear surface region are set as the touch regions of the pair of input operations.

7. The portable electronic apparatus according to claim 1, wherein the input processing unit receives the touch operation on the display region of the icon performed on the first display screen and the touch operation on the rear surface region of the display region of the icon performed on the second display screen as character input operations of a pair of character types.

8. An input operation reception method of a portable electronic apparatus having first and second display screens which mutually constitute front and rear surfaces, the input operation reception method comprising:
a display control step of causing the first display screen to display an icon; and
an input processing step of receiving a touch operation on a display region of the icon performed on the first display screen and a touch operation on a rear surface region of the display region of the icon performed on the second display screen as a pair of input operations.

9. A computer-readable recording media having stored thereon an input operation reception program that, when executed on a computer, which controls a portable electronic apparatus having first and second display screens which mutually constitute front and rear surfaces, causes the computer to execute:
a display control step of causing the first display screen to display an icon; and
an input processing step of receiving a touch operation on a display region of the icon performed on the first display screen and a touch operation on a rear surface region of the display region of the icon performed on the second display screen as a pair of input operations.
